# EUROPEAN PATENT SPECIFICATION

(11) **EP 0 764 846 B1**
(45) Date of publication and mention of the grant of the patent: **21.11.2001**
(21) Application number: 96115014.1
(22) Date of filing: 19.09.1996
(51) Int. Cl.: G01N 21/90

(54) **Container inspection with field programmable gate array logic**
Prüfung von Behältern mit FPGA-Logik
Inspection de récipients avec logique FPGA

(30) Priority: 22.09.1995 US 532350
(43) Date of publication of application: 26.03.1997
(73) Proprietor: OWENS-BROCKWAY GLASS CONTAINER INC., Toledo, Ohio 43666 (US)
(72) Inventor: Juvinall, John W., Ottawa Lake, MI 49627 (US)
(74) Representative: Blumbach, Kramer & Partner GbR

(56) References cited:
- EP-A- 0 200 478
- EP-A- 0 543 629
- US-A- 4 958 223
- US-A- 5 361 373
- INTERNATIONAL JOURNAL OF ELECTRONICS, OCT. 1993, UK, vol. 75, no. 4, ISSN 0020-7217, pages 725-730, XP000399046 CHAN S C ET AL: "A programmable image processing system using FPGAs"
- TRANSACTIONS OF THE INSTITUTE OF MEASUREMENT AND CONTROL, 1992, UK, vol. 14, no. 4, ISSN 0142-3312, pages 196-203, XP002022195 SMITH J S ET AL: "A high-speed image acquisition system for robotics"

## Description

The present invention is directed to a machine vision system according to the preamble of claim 1, to a system for inspecting containers according to the preamble of claim 5, and to a method of inspecting optical characteristics of a container according to the preamble of claim 9.

### Background and Objects of the Invention

A high-speed image acquisiton system for robotics is known from an article by J. S. Smith et al. in "Transactions of the Institute of Measurements and Control", 14 (1992), 196-203, and discloses how to reduce image capture time. A preprocessor in the meaning of invention is not described.

A programmable image processing system using FGPAs is known from C. S. Cham et al. "International Journal of Electronics", 75 (1993), pages 725-730, yet not for inspecting systems for containers and similar objects.

Conventional technology for mass production of glass or plastic containers involves forming the containers in a multiplicity of blow molds. Various types of faults or checks, termed "commercial variations" in the art, may occur. It has heretofore been proposed to employ optical scanning techniques for inspecting such containers for variations that affect optical transmission characteristics of the containers. In US-A-4,378,493, 4,378,494 and 4,378,495, there are disclosed methods and apparatus in which glass containers are conveyed through a plurality of stations in which they are physically and optically inspected. At one inspection station, a glass container is held in vertical orientation and rotated about its vertical axis. An illumination source directs diffused light energy through the container sidewall. A camera, which includes a plurality of light sensitive elements or pixels oriented in a linear array parallel to the vertical axis of container rotation, is positioned to view light transmitted through a vertical strip of the container sidewall. The output of each pixel element is sampled at increments of container rotation, and event signals are generated when adjacent pixel signals differ by more than a preselected threshold level. An appropriate reject signal is produced and the rejected container is sorted from the conveyor line.

U.S. Patent No. 4,958,223, also assigned to the assignee hereof, discloses apparatus for inspecting the finish of a container as the container is rotated about its central axis. A light source is positioned to direct diffused light energy onto the container finish, and a camera is positioned across the axis of the container from the light source. The camera comprises a CCD image array sensor having a matrix of image sensing elements arranged in a row-and-column array with transport registers and gating electronics on the sensor for selectively reading image data at the sensing elements sequentially by row and column. Image processing electronics is coupled to the array and generates camera control signals for selectively integrating data from adjacent columns and/or rows on the image array sensor, and for downloading data from the sensor to the image processing electronics only from image data areas of interest. Such data compression not only improves signal-to-noise ratio by performing data processing on the sensor itself, but also saves image processor memory by downloading data only from image areas of interest..

U.S. Patent No. 5,214,713, also assigned to the assignee hereof, discloses a system for inspecting containers in which a camera obtains an image of the container that consists of a plurality of pixels each forming a portion of the image, and a memory receives and stores the image pixel data from the camera. A systolic array processor includes a plurality of one-bit data processors configured in a rectangular array, and a microcoded controller for controlling operation of the plurality of one-bit data processors to process data simultaneously and in parallel. A data-dependent processor separate from the systolic array processor is adapted to perform non-sequential and/or data-dependent processing of image data. A master computer is connected to the camera control electronics, memory, systolic array processor and data-dependent processor. By controlling operation of these electronics, the master computer obtains pixel data from the camera and stores such data by pixel in memory, retrieves pixel data from memory and loads such data by pixel into the systolic array processor such that each of the plurality of one-bit processors receives and operates on one byte of pixel data, returns data from the systolic array processor to the memory, and retrieves pixel data from memory for loading such data into the data-dependent processor for non-sequential or data-dependent image processing.

Although the systems and techniques disclosed in the above-noted patents represent significant advances in previous inspection technology, improvements remain desirable. In particular, it is highly desirable for machine vision systems employed in manufacturing inspection applications, such as in container inspection for manufacturing process control, to process the container image data rapidly and in real time as the data is read from the camera, as distinguished from storing all camera image data in memory for subsequent non-real time processing. It is a general object of the present invention to provide a machine vision system and method that addresses this need in the art. A more specific object of the present invention is to provide a system and method of the described character that employs programmable logic hardware for preprocessing image data sequentially and in real time, and in which the preprocessing hardware may be readily reprogrammed or reconfigured for performing differing preprocessing operations on the image data.

### Summary of the Invention

A machine vision system in accordance with the present invention includes a camera for obtaining an image that comprises a plurality of pixel data each forming a portion of the image, a preprocessor for receiving and performing selected preprocessing operations on pixel data from the camera, and a main processor for performing image analysis on preprocessed pixel data received from the preprocessor. The preprocessor comprises an array of hardware logic elements variably configurable to process pixel data serially and in real time in a manner determined by configuration of the hardware logic elements. The preprocessor is responsive to controls from the main processor for selectively varying configuration of the hardware logic elements to preprocess pixel data from the camera in a preselected manner controlled by the main processor.

In the presently preferred implementation of the invention in a system for inspecting containers, a container is held in stationary position and rotated about its axis. Light energy is directed onto the container as it is rotated, and a camera obtains an image of the container illuminated by the light energy. The container image, consisting of a plurality of pixel data bytes each forming a portion of the image, is directed serially and in sequence to a programmable logic device, in which an array of hardware logic elements is preconfigured such that the elements of the array operate on a plurality of sequential pixel data bytes simultaneously and in real time. The pixel data is analyzed to obtain inspection information as a function of optical characteristics of the container. A digital memory contains prestored configuration programs for the programmable logic device. Electronics is responsive to the main processor for selecting among the configuration programs prestored in memory, and selectively configuring or reconfiguring the array of hardware logic elements in the programmable logic device for performing the selected preprocessing operation(s) on image pixel data from the camera. Operation of the camera and the programmable logic device is synchronized to increments of container rotation in the preferred embodiment of the invention.

### Brief Description of the Drawings

The invention, together with additional objects, features and advantages thereof, will be best understood from the following description, the appended claims and the accompanying drawings in which:
FIG. 1 is a functional block diagram of a system for inspecting the bottom and heel portions of a container in accordance with one presently preferred implementation of the invention;
FIG. 2 is a functional block diagram of the preprocessor in FIG. 1;
FIG. 3 is a more detailed functional block diagram of the FPGA in FIG. 2 configured to perform bottom and heel analysis in the implementation of FIG. 1;
FIGS. 4A and 4B together comprise a schematic illustration of the bottom and heel of a container inspected in FIG. 1 (FIG. 4A) and the resulting electronic image thereof (FIG. 4B); and
FIGS. 5A and 5B are schematic illustrations of a container bottom and heel with various commercial variations (FIG. 5A) and the resulting image (FIG. 5B).

### Detailed Description of the Preferred Embodiment

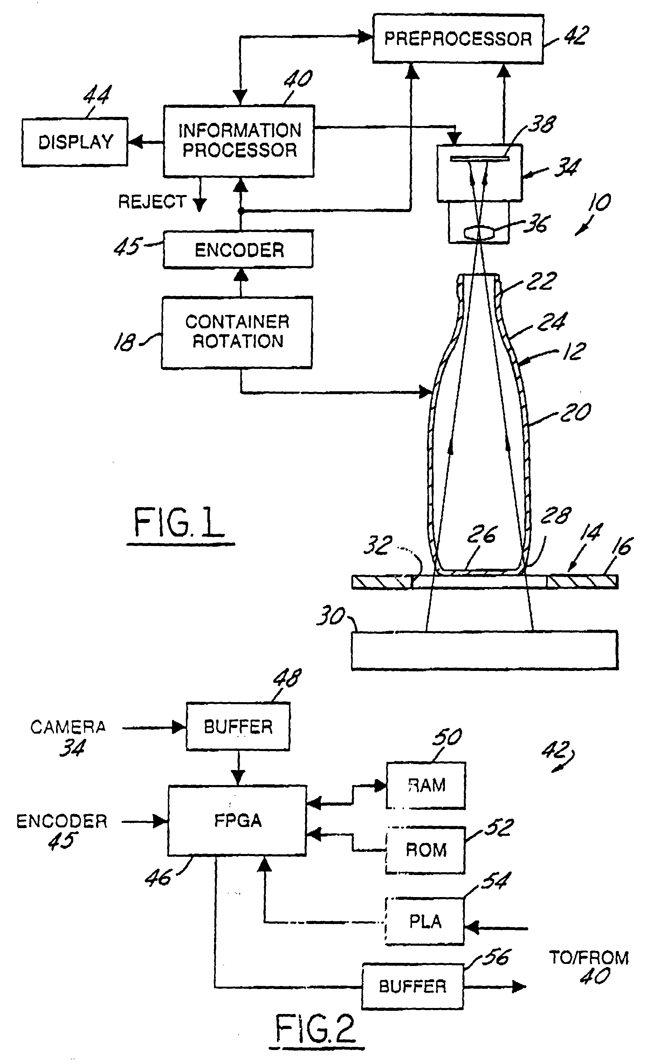

FIG. 1 illustrates a machine vision system 10 in accordance with the present invention configured for inspecting the bottom and heel of a container 12. A conveyor 14, typically including a starwheel (not shown) and a slide plate 16, is so disposed and connected to a source of molded containers as to bring successive containers 12 into position at the inspection station illustrated in FIG. 1. Conveyor 14 may be of any suitable type, such as those shown in U.S. Patent Nos. 4,230,219 and 4,378,493, and would typically include a rotatable starwheel for bringing successive containers into position and holding the containers in fixed position during the inspection operation. A container rotating device 19, such as a drive roller, is positioned to engage container 12 at the inspection station and to rotate the container about its central axis.

In the preferred implementation of the invention herein discussed, container 12 is illustrated as a molded glass bottle having a container body 20, a generally cylindrical neck 22 that projects upwardly from a body shoulder 24, and a bottom 26 that is blended by a heel 28 into the body portion 20 of the container. Inspection system 10 is configured in FIG. 1 to inspect bottom 26 and heel 28 of container 12. However, as will be apparent from the following discussion, the present invention is by no means limited to this specific implementation.

A light source 30 is positioned beneath slide plate 16, and directs light energy upwardly through an opening 32 in slide plate 16 into the container through bottom 26 and heel 28. A camera 34 is disposed above and in alignment with slide plate opening 32 for viewing container bottom 26 and heel 28 downwardly through the container mouth as the container is held in stationary position, rotated about its central axis, and illuminated from beneath by light source 30. Thus, the camera obtains an image of at least that portion of the container under inspection. An image of the illuminated bottom and heel of container 12 is focused by a lens 36 within camera 34 onto a CCD linear array sensor 38. Thus, a linear or one-dimensional image of the bottom and heel portions of container 12 is developed at camera sensor 38 that consists of a plurality of pixel data bytes sequentially readable or scannable from sensor 38. Camera 34 is controlled by an information processor 40 for downloading image data serially by byte to a preprocessor 42. Within preprocessor 42, the image data is processed in a selected manner, and then fed to information processor 40 for obtaining inspection information as a function of optical characteristics of container 12. Information for processor 40 can provide a reject signal for separation of a container 12 having undesirable or unacceptable checks or variations, or can provide an image of all or a portion of the inspected portion of the container at a display 44. Operation of information processor 40 and preprocessor 42 is synchronized to increments of container rotation, either directly by an encoder 45 as a function of actual container rotation, or indirectly by increments of time with the container being rotated at constant velocity.

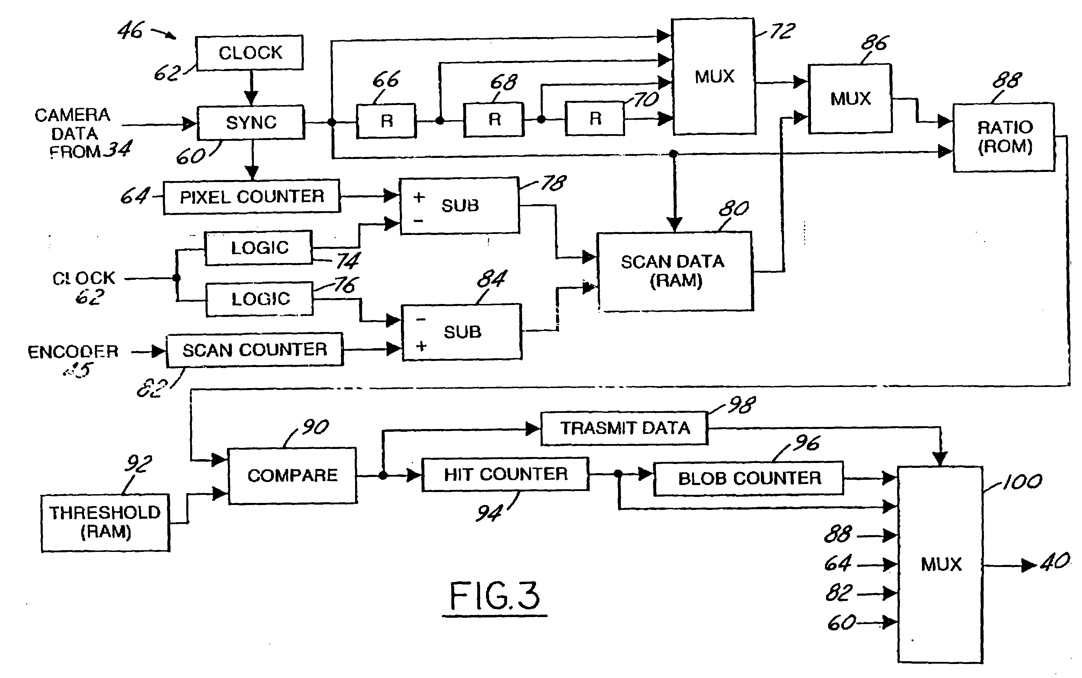

FIG. 2 is a functional block diagram of preprocessor 42. A field programmable gate array or FPGA 46 receives camera image data serially by byte through an image buffer 48. FPGA 46 is a conventional programmable logic device that contains an array of hardware logic elements variably configurable to process pixel data from camera 34 serially and in real time in a manner determined by configuration of the hardware logic elements. A presently preferred programmable logic device or FPGA 46 is the FLEX 8000 programmable logic device family marketed by Altera Corporation of San Jose, California. FPGA 46 is connected to a RAM 50 and a ROM 52, both for receiving configuration program information and performing image analysis, as will be described. FPGA 46 receives a control input from information processor 40 through a programmable logic array or PLA 54 for selectively programming or reprogramming FPGA 46, and provides output image information to information processor 40 through an image buffer 56. ROM 52 contains at least one and preferably a plurality of programs for selectively configuring FPGA 46 to perform differing preprocessing operations on input image pixel data. These programs are selectable by information processor 40 depending upon the inspection operation to be performed - e.g., bottom and heel inspection in the implementation of FIG. 1 - and the desired preprocessing algorithm. One preprocessing algorithm for bottom and heel inspection will be discussed in detail in connection with FIG. 3. PLA 54 is preprogrammable in association with command signals from information processor 40 for selectively commanding FPGA 46 to download configuration programs from ROM 52, either on power-up of the overall system, or selectively under control of information processor 40 through PLA 54 in the event that a different preprocessing algorithm is desired.

FIG. 3 is a functional block diagram of FPGA 46 in FIG. 2 configured to preprocess image pixel data for bottom and heel inspection in the implementation of FIG. 1. Camera pixel data is received serially by pixel byte at a synchronizer 60 controlled by a processor clock 62. The synchronizer also drives a pixel counter 64 for tracking pixel data received from the camera within each scan. The synchronized pixel input data is fed through sequential shift registers 66,68,70. The outputs of synchronizer 60 and of each register 66,68,70 are fed to a corresponding input of a multiplexer 72. Thus, four sequential bytes of pixel data, representing the outputs of four sequential elements of linear-array sensor 38 (FIG. 1), appear at the four inputs of multiplexer 72. A pair of logic gates 74,76 are selectively set by the programming for determining separation between pixel data bytes to be compared within a camera scan line (logic 74) and the number of scan lines between pixel data bytes to be compared (logic 76). That is, the analysis is performed in this exemplary implementation by comparing pixel data bytes within a camera scan line, either adjacent to each other or separated by a number of bytes determined by programming of logic 74, and by comparing the same byte number within two scan lines, either adjacent scan lines or scan lines separated from each other by the programing of logic 76. Logic elements 74,76 are driven by processor clock 62. Pixel counter 64 and logic element 74 are connected to a subtraction circuit 78, which subtracts from the setting of logic 74 from the pixel count within each scan line. This generates an address that addresses a scan data RAM 80 (part of RAM 50 in FIG. 2). Subtractor 78 generates the pixel portion of the address and subtractor 84 generates the scan portion of the address. Together they can generate the address for any previous pixel in the current scan line or a previous scan line. Current pixel data is continuously being stored in scan data RAM 80. Therefore, the pixel data from a previous pixel in the same scan line or from a previous scan line can be retrieved by addressing the proper location in the RAM.

A multiplexer 86 receives the output of multiplexer 72 and the output of scan data element 80. Thus, multiplexer 86 can select among the most recent pixel data byte and three immediately preceding pixel data bytes (through multiplexer 72), and a preselected previous pixel data byte (through scan data element 80) either within the same scan line or in a selected preceding scan line. The output of multiplexer 86 is fed to one input of a ratio computation element 88, which receives a second input from synchronizer 60, which is of course the most recent pixel data input byte. Thus, at ratio element 84, the current input data byte may be compared with any one of the three immediately previous bytes at the output of shift registers 66,68,70, with any previous byte from within the same scan line as determined by subtraction element 78 and scan data element 80, or with the same pixel data byte from any previous scan line as determined by subtraction element 84 and scan element 80. Ratio element 88 preferably is formed by a portion of ROM 52 (FIG. 2) for receiving the two input bytes as the two ROM address inputs, and providing an output as a function of the ratio therebetween. Such ratios are, of course, prestored in ROM 52.

The output of ratio element 88 is fed to a comparator 90, at which the computed ratio is compared to a threshold 92 prestored in RAM 50 (FIG. 2). There is a threshold 92 stored in RAM 50 for each pixel, and pixel counter 64 addresses the RAM to read the appropriate threshold. When this comparison indicates that the ratio of the image pixel bytes developed at 88 exceeds threshold 92, a "hit" counter 94 is incremented. A predetermined number of sequential hits indicates detection of a "blob," and increments a blob counter 96. Blob counter 96 is incremental at the end of each string of consecutive hits. Each hit developed at comparator 90 functions through element 98 to signal an output multiplexer 100 to transmit data to main information processor 40 (FIG. 1). On sequential hits, the output of multiplexer 100 is developed from blob counter 96, hit counter 94, ratio 88, sync 60, counter 64 and counter 82. Thus, sequential hits resulting from image data byte comparisons effectively download image information to the main information processor. The main information processor can develop quality control information from the number and frequency of these data. In this way, the main processor need not process all image data, but only data of interest for detection of unacceptable commercial variations. Alternatively, of course, main processor 40 may command download of all pixel data from RAM 50 for processing and/or display at 44.

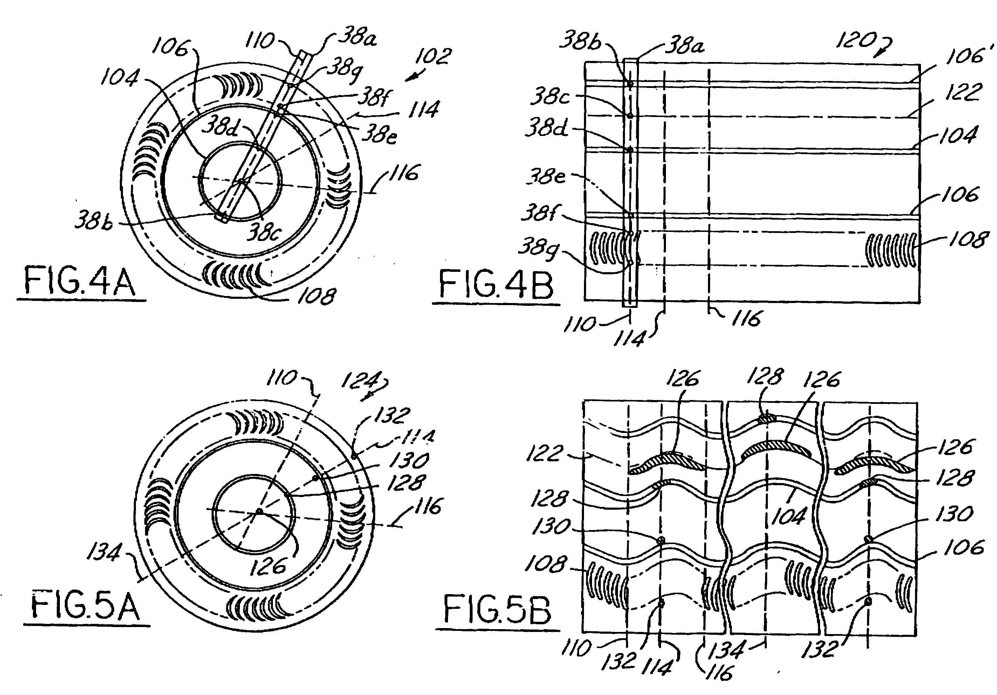

FIG. 4A illustrates a container bottom and heel 102 having an inner ring 104, a start ring 106 and raised wear ridges 108. Scan lines 110,114 and 116 are illustrated in phantom. Also illustrated in FIG. 4A for purposes of understanding is an image 38a that represents the portion of the total container bottom and heel 102 viewed by camera sensor 38 at scan increment 110. As noted above, sensor 38 in this embodiment is a linear array sensor having a plurality of sensor elements - e.g., 512 sensor elements. Six of these elements 38b,38c,38d,38e,38f and 38g are illustrated in FIG. 4A at ring 104, the container axis, ring 104, ring 106, the inside edge of ridge 108 and the outside edge of ridge 108 respectively. Camera sensor 38 is scanned at increments of container rotation to develop a two-dimensional electronic image 120 of the container bottom and heel, as illustrated in FIG. 4B. The ridges 108 appear adjacent to the bottom of image 120, with start ring 106 appearing immediately above, inner ring 104 above the start ring, and a line 122 representing the center of the container above start ring 104. An image 106' of inner ring 106 is repeated at the top of the image. Scan lines 110,114,116 are again represented in phantom, as is image 38a and sensor elements 38b-38g in scan 110.

FIGS. 5A and 5B illustrate a container having both wobble and opaque stone variations in the container bottom 124. Stones 126,128,130 and 132 are illustrated in container bottom 124 in FIG. 5A, and the corresponding images are illustrated in FIG. 5B. Note that on scan line 134 stone 126 adjacent to the container center and stone 128 at inner ring 104 repeat, but on the opposite side of the container center 122. Stone 126 smears because of the lesser angular velocity at the container center.

There have thus been disclosed a method and system that full satisfy all of the objects and aims previously set forth. It will be appreciated, of course, that although the invention has been disclosed in conjunction with a presently preferred implementation for bottom and heel analysis, the invention could be readily employed for other types of container inspection and analysis, such as container sidewall inspection as disclosed in U.S. Patent No. 4,601,395, container finish inspection as disclosed in U.S. Patent No. 4,701,612, container sealing surface inspection as disclosed in U.S. Patent No. 4,945,228, or container mold identification as disclosed in U.S. Patent No. 4,644,151. It will also be appreciated that, although the invention has been described in conjunction with a data compression preprocessing application - i.e., an application in which the preprocessing locates "hits" indicative of commercial variations and passes only this information to the main processor for further further analysis - the programmable logic device that characterizes the invention could as readily be used for other preprocessing applications, such as data filtering, convolution filtering, FIR filtering, Z transform filtering, erode analysis or dilation analysis. Indeed, a particularly important advantage of the present invention lies in the fact that algorithms for performing any or all of these preprocessing functions may be prestored in ROM 52 (FIG. 2) and selectively activated by main information processor 40 (FIG. 1) as desired.

The image preprocessor in accordance with the invention operates on pixel data in real time serially as received from the camera. The system is highly pipelined, which is to say that at any point in time, sequential elements of the preprocessor are operating on sequential bytes of pixel data. The system can therefore complete the preprocessing operation in the time required by the slowest single component, rather than the sum of times of all processing components. In effect, all of the pipeline elements are processing pixel data in parallel. As more processing is required, additional pipelined stages may be added without in any way slowing the preprocessing operation. Elements such as adders, accumulators, counters, multiplexers and comparators can be implemented in the programmable logic device. Multipliers and dividers preferably are implemented as look-up tables in an external ROM or RAM. Data from previous scans is stored in and retrieved from external RAM, and parameters such as thresholds can be stored on a per-pixel basis in external RAM.

## Claims

1. A machine vision system that includes:
camera means (34) for vision of an object which has relative movement to the camera (34) so as to obtain consecutive images that comprise a plurality of pixel data bytes each forming a portion of a single image,
preprocessing means (42) for receiving pixel data from said camera means (34) and performing selected preprocessing operations thereon,
main processing means (40) for receiving preprocessed pixel data from said camera means (34) and performing image analysis on said pixel data,
**characterized in that**
said preprocessing means (42) comprises a field programmable gate array (46) of hardware logic elements (66, 68, 70) variably configurable to process pixel data bytes of said single image portion serially in a real time in a manner determined by configuration of said hardware logic elements (66, 68, 70), and
means (50, 52) coupled to said main processing means (40) for selectively varying configuration of said hardware logic elements (66, 68, 70) to process pixel data bytes from said camera means (34) in preselected manner controlled by said main processing means (40).

2. The system set forth in claim 1
wherein said selectively varying means (50, 52) comprises digital memory means having prestored therein a plurality of configuration programs, means responsive to said main processing means (40) for selecting among said plurality of configuration programs in said digital memory means, and means for configuring said array (46) of hardware logic elements (66, 68, 70) as a function of the configuration program selected from said digital memory means (50, 52).

3. The system set forth in claim 1
wherein said array (46) of hardware logic elements (66, 68, 70) is configurable such that elements of said array in sequence operate on a different byte of pixel data in such a way that said array operates on a plurality of sequential pixel data bytes simultaneously.

4. The system set forth in claim 1, 2 or 3
wherein said array (46) of hardware logic elements (66, 68, 70) comprises a programmable logic device.

5. A system for inspecting containers that comprises:
means (16, 18) for holding a container (12) in stationary position and rotating the container about its axis,
means (30) for directing light energy into the container (12) in said holding and rotating means (16, 18),
camera means (34) for obtaining an image of the container (12) in said holding and rotating means (16, 18) illuminated by said light energy, said image consisting of a plurality of pixels each forming a portion of said image, and
information processor means (40) for providing pixel data bytes to be stored and compared,
**characterized in that** said camera means (34) is adapted to deliver pixel data bytes serially and in sequence for single image portions,
that programmable logic means (42) is coupled to said camera means (34) as a preprocessing means for receiving said pixel data bytes serially and in sequence, said programmable logic means (42) comprising a field programmable gate array (46) of hardware logic elements (66, 68, 70) configured such that elements of said array (46) operate on a plurality of sequential pixel data bytes simultaneously and in real time, and
**in that** said information processor means (40) is responsive to pixel data processed by said programmable logic means (42) for obtaining inspection information as a function of optical characteristics of the container (12).

6. The system set forth in claim 5
further comprising means (50, 52) for selectively varying configuration of said hardware logic elements (66, 68, 70) in said programmable logic means (42) for performing differing processing operations on pixel data received from said camera means.

7. The system set forth in claim 6
wherein said selectively varying means (50, 52) comprises digital memory means (52) having prestored therein a plurality of configuration programs, means (40) for selecting among said plurality of configuration programs in said digital memory means, and means (54) for configuring said array (40) of hardware logic elements as a function of the configuration program selected from said digital memory means.

8. The system set forth in claim 5
further comprising means (45) responsive to said holding and rotating means (16, 18) for synchronizing operation of said programmable logic means (42) to increments of container rotation.

9. A method of inspecting optical characteristics of a container, comprising the steps of:
(a) obtaining an image of the container (12),
(b) converting image information into a plurality of pixel data bytes, each forming a portion of said image, and
(c) processing said pixel data bytes so as to obtain inspection information as a function of optical characteristics of the container,
**characterized in that**
in step (a) said image of the container (12) is obtained serially and in sequence for single image portions;
in step (b) said plurality of pixel data bytes is received by a field programmable gate array (46) of configurated hardware logic elements (66, 68, 70), each logic element forming a sequential section of the array (46) which carries a respective single image portion;
in step (c) processing is for sequential pixel data bytes simultaneously in said sequential sections of said array (46).

10. The method set forth in claim 9
further comprising the steps of:
(d) rotating the container (12) about its axis, and
(e) synchronizing operation of said steps (a) and (b) to increments of container rotation.

## Patentansprüche

1. Maschinelles optisches Erkennungssystem mit folgenden Merkmalen:
eine Kameraeinrichtung (34) zur Abbildung eines Objekts, welches sich relativ zur Kamera (34) bewegt, um aufeinander folgende Bilder zu erhalten, die eine Mehrzahl von Pixeldaten-Bytes enthalten, die jeweils einen Teil eines einzelnen Bildes bilden;
eine Vorbearbeitungseinrichtung (42), um Pixeldaten von der Kameraeinrichtung (34) zu empfangen und ausgewählte Vorbearbeitungsoperationen auf diese auszuführen;
eine Hauptverarbeitungsvorrichtung (40) zum Empfang der vorverarbeiteten Pixeldaten von der Kameraeinrichtung (34) und zur Ausführung von Bildanalyse auf diese Pixeldaten,
**dadurch gekennzeichnet,**
**dass** die Vorbearbeitungseinrichtung (42) eine Feldprogrammierbare Gate-Array (46) von Hardware-logischen Elementen (66, 68, 70) umfasst, die variabel konfigurierbar sind, um Pixeldaten-Bytes des einzelnen Bildteils seriell und in Realzeit in einer Weise zu verarbeiten, die durch die Konfiguration der Hardware-logischen Elemente (66, 68, 70) bestimmt wird, und
**dass** Mittel (50, 52) mit der Hauptverarbeitungseinrichtung (40) verbunden sind, um die Konfiguration der Hardware-logischen Elemente (66, 68, 70) selektiv zu ändern, um Pixeldatenbytes von der Kameraeinrichtung (34) in vorgewählter Weise zu bearbeiten, wie durch die Hauptverarbeitungseinrichtung (40) gesteuert.

2. System nach Anspruch 1,
**dadurch gekennzeichnet, dass** die Mittel (50, 52) zur selektiven Änderung digitale Speichermittel umfassen, in welchen eine Mehrzahl von Konfigurationsprogrammen voreingegeben sind, ferner auf die Hauptverarbeitungseinrichtung (40) ansprechende Mittel, um unter der Mehrzahl der Konfigurationsprogramme in den digitalen Speichermitteln auszuwählen, und Mittel zur Konfigurierung der FPGA (46) der Hardware-logischen Elemente (66, 68, 70) als Funktion des ausgewählten Konfigurationsprogramms der digitalen Speichermittel (50, 52).

3. System nach Anspruch 1,
worin das FPGA (46) der Hardware-logischen Elemente (66, 68, 70) so konfigurierbar ist, dass die Elemente der FPGA aufeinander folgend auf ein unterschiedliches Byte von Pixeldaten in solcher Weise einwirken, dass das FPGA eine Mehrzahl von nachfolgenden Pixeldaten-Bytes gleichzeitig bearbeitet.

4. System nach Anspruch 1, 2 oder 3,
**dadurch gekennzeichnet, dass** das FPGA (46) der Hardware-logischen Elemente (66, 68, 70) eine programmierbare logische Einrichtung umfasst.

5. System zur Inspektion von Behältern mit folgenden Merkmalen:
Mittel (16, 18) zum Halten eines Behälters (12) in stationärer Stellung und Drehen des Behälters um seine Achse;
Mittel (30), um Licht in den Behälter (12) zu schicken, der sich in der Halte- und Dreheinrichtung (16, 18) befindet;
eine Kameraeinrichtung (34), um ein Bild des Behälters (12) in der Halte- und Dreheinrichtung (16, 18) zu erhalten, der von dem Licht beleuchtet wird, wobei das Bild aus einer Mehrzahl von Pixeln besteht, die jeweils einen Teil des Bildes bilden; und
eine Informationsverarbeitungseinrichtung (40), um zu speichernde und zu vergleichende Pixeldaten-Bytes zu liefern,
**dadurch gekennzeichnet,**
**dass** die Kameraeinrichtung (34) zur Lieferung von Pixeldaten-Bytes seriell und aufeinander folgend für einzelne Bildteile ausgebildet ist,
**dass** eine programmierbare logische Einrichtung (42) mit der Kameraeinrichtung (34) als Vorbearbeitungseinrichtung für den Empfang der Pixeldaten-Bytes seriell und in Aufeinanderfolge verbunden ist, wobei die programmierbare logische Einrichtung (42) eine feldprogrammierbare Gate-Array (46) von Hardware-logischen Elemente (66, 68, 70) umfasst, die so konfiguriert sind, dass Elemente der FPGA (46) eine Mehrzahl von sequentiellen Pixeldaten-Bytes gleichzeitig und in Realzeit bearbeiten, und
**dass** die Informationsverarbeitungseinrichtung (40) auf Pixeldaten anspricht, die von der programmierbaren logischen Einrichtung (42) verarbeitet werden, um Inspektionsinformation als eine Funktion der optischen Eigenschaften des Behälters (12) zu erhalten.

6. System nach Anspruch 5,
**dadurch gekennzeichnet, dass** Mittel (50, 52) zur selektiven Änderung der Konfiguration der Hardware-logischen Elemente (66, 68, 70) in der programmierbaren logischen Einrichtung (42) vorgesehen sind, um unterschiedliche Bearbeitungsoperationen auf die von der Kameraeinrichtung empfangenen Pixeldaten auszuführen.

7. System nach Anspruch 6,
**dadurch gekennzeichnet, dass** die Mittel (50, 52) zur selektiven Änderung eine digitale Speichereinrichtung (52) umfasst, in welcher eine Mehrzahl von Konfigurationsprogrammen voreingegeben ist, ferner Mittel (40) zur Auswahl unter der Mehrzahl der Konfigurationsprogramme in der digitalen Speichereinrichtung, und Mittel (54) zur Konfigurierung der Anordnung (40) von Hardware-logischen Elementen als eine Funktion des aus der digitalen Speichereinrichtung ausgewählten Konfigurationsprogramms.

8. System nach Anspruch 5,
**dadurch gekennzeichnet, dass** eine Einrichtung (45) auf die Halte- und Dreheinrichtung (16, 18) anspricht, um den Betrieb der programmierbaren logischen Einrichtung (42) mit Schritten der Behälterdrehung zu synchronisieren.

9. Verfahren der Prüfung optischer Eigenschaften eines Behälters, mit folgenden Schritten:
(a) ein Bild des Behälters (12) wird empfangen;
(b) die Bildinformation wird in eine Mehrzahl von Pixeldaten-Bytes umgewandelt, die jeweils einen Teil des Bildes bilden, und
(c) die Pixeldaten-Bytes werden so bearbeitet, dass Prüfinformationen als Funktion der optischen Eigenschaften des Behälters erhalten werden,
**dadurch gekennzeichnet,**
**dass** in Schritt (a) das Bild des Behälters (12) seriell und in Aufeinanderfolge für einzelne Bildteile erhalten wird;
**dass** in Schritt (b) die Mehrzahl der Pixeldaten-Bytes durch ein feldprogrammierbares Gate-Array (46) von konfigurierten Hardware-logischen Elementen (66, 68, 70) erhalten wird, wobei jedes logische Element einen sequentiellen Abschnitt des FPGA (46) bildet, welches ein jeweiliges einzelnes Bildteil trägt; und
im Schritt (c) die Verarbeitung für sequentielle Pixeldaten-Bytes gleichzeitig in den sequentiellen Abschnitten des FPGA (46) erfolgt.

10. Verfahren nach Anspruch 9, mit folgenden weiteren Schritten:
(d) der Behälter (12) wird um seine Achse gedreht, und
(e) der Betrieb gemäß Schritten (a) und (b) wird zu den Schritten der Behälterdrehung synchronisiert.

## Revendications

1. Système de vision artificielle, comprenant :
un moyen formant caméra (34) pour l'observation d'un objet qui se déplace par rapport à la caméra (34) de façon à obtenir des images consécutives comportant une pluralité d'octets de données de pixels formant chacun une partie d'une même image,
un moyen de prétraitement (42) servant à recevoir des données de pixels dudit moyen formant caméra (34) et à exécuter sur celles-ci des opérations de prétraitement choisies,
un moyen de traitement principal (40) servant à recevoir des données de pixels prétraitées dudit moyen formant caméra (34) et à exécuter une analyse d'image sur lesdites données de pixels,
**caractérisé en ce que**
ledit moyen de prétraitement (42) comporte un réseau (46) de portes programmable sur place, constitué par des éléments logiques matériels (66, 68, 70) à configuration pouvant être modifiée pour traiter en série en temps réel des octets de données de pixels de ladite partie d'image unique déterminée par la configuration desdits éléments logiques matériels (66, 68, 70), et
un moyen (50, 52) couplé audit moyen de traitement principal (40) pour modifier d'une façon sélective la configuration desdits éléments logiques matériels (66, 68, 70) afin de traiter, d'une manière préalablement choisie et commandée par ledit moyen principal de traitement (40), les octets de données de pixels fournis par ledit moyen formant caméra (34).

2. Système selon la revendication 1,
dans lequel ledit moyen (50, 52) de modification sélective comporte un moyen formant mémoire numérique dans laquelle sont stockés plusieurs programmes de configuration, un moyen réagissant audit moyen principal de traitement (40) pour procéder à une sélection parmi ladite pluralité de programmes de configuration dans ledit moyen formant mémoire numérique, et un moyen pour configurer ledit réseau (46) d'éléments logiques matériels (66, 68, 70) en fonction du programme de configuration choisi dans ledit moyen formant mémoire numérique (50, 52).

3. Système selon la revendication 1,
dans lequel ledit réseau (46) d'éléments logiques matériels (66, 68, 70) peut être configuré de sorte que des éléments dudit réseau agissent successivement sur un octet différent de données de pixel de façon que ledit réseau agisse simultanément sur plusieurs octets de données de pixels successifs.

4. Système selon la revendication 1, 2 ou 3,
dans lequel ledit réseau (46) d'éléments logiques matériels (66, 68, 70) comporte un dispositif logique programmable.

5. Système de contrôle de récipient, comprenant:
un moyen (16, 18) servant à retenir un récipient (12) en position fixe et à faire tourner le récipient autour de son axe,
un moyen (30) servant à diriger une énergie lumineuse dans le récipient (12) placé dans ledit moyen de retenue et de rotation (16, 18),
un moyen formant caméra (34) servant à réaliser une image du récipient (12) dans ledit moyen de retenue et de rotation (16, 18) éclairé par ladite énergie lumineuse, ladite image étant constituée par une pluralité de pixels formant chacun une partie de ladite image, et
un moyen formant processeur (40) d'informations servant à réaliser des octets de données de pixels destinés à être stockés et comparés,
**caractérisé en ce que** ledit moyen formant caméra (34) est conçu pour délivrer en série et de manière séquentielle des octets de données de pixels pour des parties d'une même image,
**en ce qu'**un moyen logique programmable (42) est couplé audit moyen formant caméra (34) afin de constituer un moyen de prétraitement destiné à recevoir en série et de manière séquentielle lesdits octets de données de pixels, ledit moyen logique programmable (42) comportant un réseau (46) de portes programmable sur place constitué par des éléments logiques matériels (66, 68, 70) configurés de sorte que des éléments dudit réseau (46) agissent simultanément et en temps réel sur plusieurs octets de données de pixels, et
**en ce que** ledit moyen formant processeur (40) d'informations réagit à des données de pixels traitées par ledit moyen logique programmable (42) pour produire des informations de contrôle en fonction de caractéristiques optiques du récipient (12).

6. Système selon la revendication 5,
comprenant en outre un moyen (50, 52) pour modifier d'une manière sélective la configuration desdits éléments logiques matériels (66, 68, 70) dans ledit moyen logique programmable (42) afin d'exécuter diverses opérations de traitement sur des données de pixels reçues dudit moyen formant caméra.

7. Système selon la revendication 6,
dans lequel ledit moyen de modification sélective (50, 52) comporte un moyen formant mémoire numérique (52) dans laquelle sont préalablement stockés plusieurs programmes de configuration, un moyen (40) servant à sélectionner parmi ladite pluralité de programmes de configuration dans ledit moyen formant mémoire numérique, et un moyen (54) servant à configurer ledit réseau (40) d'éléments logiques matériels en fonction du programme de configuration choisi dans ledit moyen formant mémoire numérique.

8. Système selon la revendication 5,
comprenant en outre un moyen (45) réagissant audit moyen de retenue et de rotation (16, 18) pour synchroniser le fonctionnement dudit moyen logique programmable (42) avec des pas de rotation du récipient.

9. Procédé de contrôle de caractéristiques optiques d'un récipient, comprenant les étapes consistant à:
(a) réaliser une image du récipient (12),
(b) convertir les informations de l'image en une pluralité d'octets de données de pixels formant chacun une partie de ladite image, et
(c) traiter lesdits octets de données de pixels afin d'obtenir des informations de contrôle en fonction de caractéristiques optiques du récipient,
**caractérisé en ce que**
lors de l'étape (a) ladite image du récipient (12) est réalisée en série et de manière séquentielle pour des parties d'une même image;
lors de l'étape (b) ladite pluralité d'octets de données de pixels est reçue par un réseau 46 de portes programmable sur place d'éléments logiques matériels configurés (66, 68, 70), chaque élément logique formant une partie séquentielle du réseau (46) qui supporte une partie respective d'une même image;
lors de l'étape (c), le traitement porte simultanément sur des octets séquentiels de données de pixels dans lesdites parties séquentielles dudit réseau (46).

10. Procédé selon la revendication 9,
comprenant en outre les étapes consistant à:
(d) faire tourner le récipient (12) autour de son axe, et
(e) synchroniser le déroulement desdites étapes (a) et (b) avec des pas de rotation du récipient.
